# EUROPEAN PATENT SPECIFICATION

(11) **EP 0 772 352 B1**
(45) Date of publication and mention of the grant of the patent: **05.06.2002**
(21) Application number: 96306315.1
(22) Date of filing: 30.08.1996
(51) Int. Cl.: H04N 5/44

(54) **Line location adjusting circuit for PAL EDTV receiver**
Schaltung zur Einstellung der Zeileortung für PAL-ADTV-Empfänger
Circuit d'ajustement de l'emplacement des lignes pour un récepteur PAL EDTV

(30) Priority: 04.11.1995 KR 9539806
(43) Date of publication of application: 07.05.1997
(73) Proprietor: Samsung Electronics Co., Ltd., Suwon-city, Kyungki-do (KR)
(72) Inventor: Kim, Jeong-Whun, Kwacheon-city, Kyungki-do (KR)
(74) Representative: Chugg, David John

(56) References cited:
- EP-A- 0 641 127
- US-A- 5 381 183

## Description

The present invention relates to a line location adjusting circuit for PAL extended definition television EDTV receiver, and more particularly, to a line location adjusting circuit that may convert each line location of luminance high-band pixels arranged through the intra-field averaging circuit in an encoder into an original line location.

The present application for a line location adjusting circuit for a PAL EDTV receiver; is based on Korean Application No. 39806/1995.

The extended definition television (EDTV) system used in Europe is a new wide screen television format whose aspect ratio is 16:9, the system requires a technique for minimizing cross effects of Y signals and U/V signals that occur by the 180°-phase inversion of color subcarriers when a stationary picture is reproduced on television. In order to minimize such cross effects, the EDTV system's encoder converts composite video baseband signals CVBS into digital data to extract Y_{H} and U/V signals. An intra-field averaging circuit (IFA) mixes each intra-field average value of the Y_{H} and U/V signals in response to a motion detection signal generated from motion detector part, and converts the same into a composite video baseband signal (CVBS) of analogue quantity. In the meantime, the EDTV system's decoder extracts Y_{H} and U/V signals by its contrary operation to the encoder's.

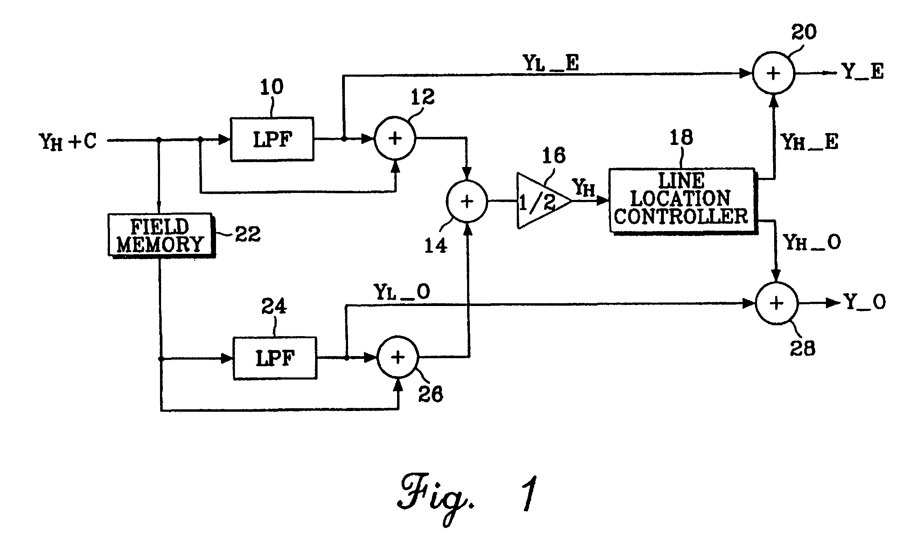

The following description concerns the steps in the extraction of a luminance high-band signal Y_{H} in a conventional EDTV system's decoder with reference to Figure 1.

Figure 1 is a circuit diagram showing the steps in the extraction of a Y_{H} signal in a European EDTV system's decoder.

Input Y_{H} + C of Figure 1 is a signal obtained by adding the CVBS to a luminance low-band signal Y_{L} generated by filtering the CVBS through a low pass filter. The input Y_{H} + C signal is filtered through a low pass filter 10, and a luminance low-band signal Y_{L_}E of the even field is inputted to adders 12 and 20. The input Y_{H} + C signal is inputted to a low pass filter 24 through a field memory 22 to be filtered therethrough, and only a luminance low-band signal Y_{L_}O of the odd field is inputted to adders 26 and 28.

Each signal Y_{L_}E and Y_{L_}O of the even and odd fields is added to the Y_{H} + C signal by the adders 12 and 26, respectively, to generate a Y_{H} signal through the adder 14 and multiplier 16. The Y_{H} signal is inputted to a line location adjusting part 18, and is separated into a luminance high-band signal Y_{H_}E of the even field and luminance high-band signal Y_{H_}O of the odd field to be inputted to the adder 20 and 28, respectively. As a result, in the adder 20, the Y_{H_}E signal and Y_{L_}E signal of the even field, are added up to generate a luminance signal Y_E of the even field, and in the adder 28, the Y_{H_}O and Y_{L_}O signals of the odd field are added up to generate a luminance Y_O signal of the odd field.

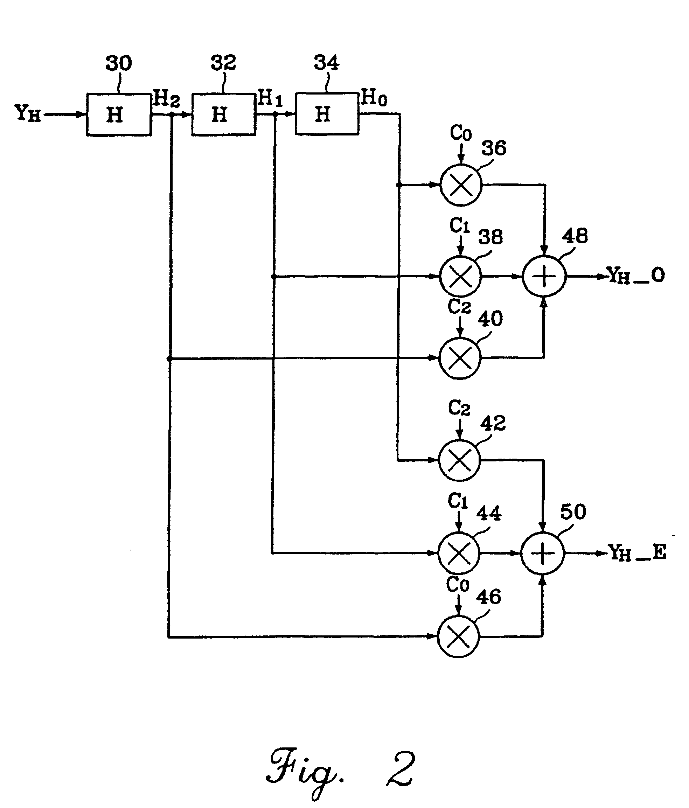

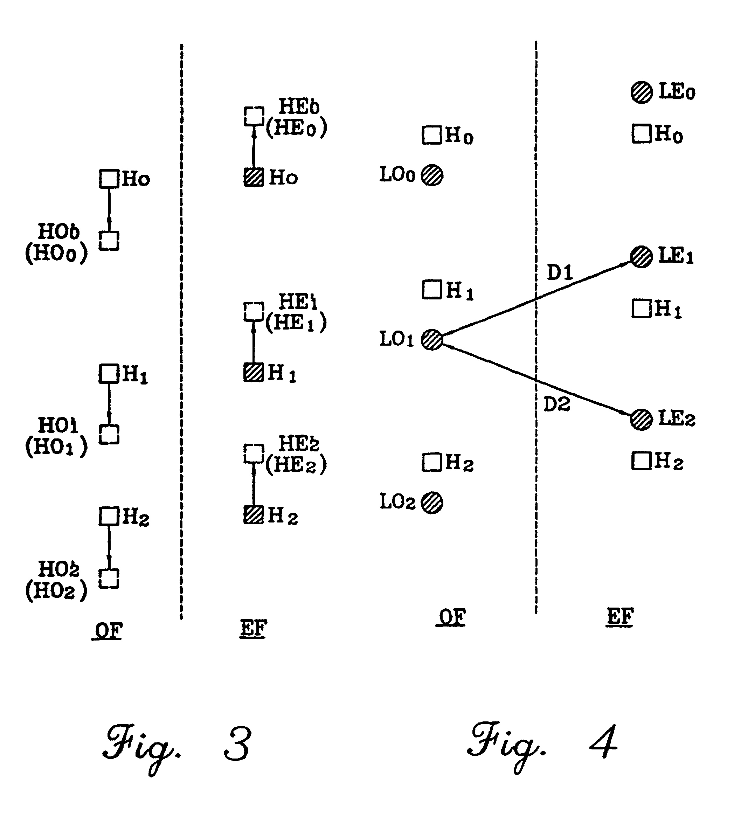

Figure 2 is block diagram showing the extraction of the Y_{H_}E and Y_{H_}O signals of the even and odd fields from the Y_{H} signal inputted to the line location adjusting part 18. Figure 3 shows the correlation between the intra-field pixels for conventional line location adjustment.

The steps in the extraction of the Y_{H_}E and Y_{H_}O signals of the even and odd fields by the correlation between the intra-field pixels from the Y_{H} signal are described as follows referring to Figures 2 and 3.

Referring first to Figure 3, the left side and right side shown in Figure 3 represent pixel positions of the odd and even fields, respectively. Reference letters H0 to H2 denote each position of the luminance high-band pixels are arranged through an intra-field addressing circuit of the encoder. Reference letters HO₀ to HO₂ and HE₀ to HE₂ denote each original location of the luminance high-band pixels of the odd and even fields. Reference letters HO'₀ to HO'₂ and HE'₀ to HE'₂ indicate each location of the luminance high-band pixels of the odd and even fields to be generated. The luminance high-band pixels H0 to H2, the object of location adjustment, become disposed between the luminance high-band pixels HO₀ to HO₂ of the even field by H₀ = (HO₀+HE₀)/2, H₁ = (HO₁+HE₁)/2, H₂ = (HO₂+HE₂)/2.

For adjustment of location, the luminance high-band pixels H₁ of the odd and even fields are moved to HO'₁+HE'₁, respectively. The luminance high-band pixels H₀ to H₂, the object of location adjustment, are delayed by 1H (horizontal scanning line) by delays 30, 32 and 34. As shown in Figure 2, the line location adjusting part 18 of the conventional EDTV system multiplies the pixels of the odd and even fields by coefficients of C₀, C₁ and C₂ and C₂, C₁ and C₀, respectively, to extract Y_{H_}O and Y_{H_}E signal each.

In the conventional line location adjusting part 18, however, the luminance high-band pixels H₀ to H₂ of three lines are multiplied by constants regardless of the correlation of intra-field neighbouring pixels to cause deterioration to resolution at closely adjacent parts of an image whose level is significantly varied.

It is an aim of embodiments of the present invention to provide a line location adjusting circuit that can convert each line location of luminance high-band pixels average-arranged by an intra-field averaging circuit of an encoder of EDTV system into an original line location.

According to an aspect of the present invention, there is provided a line location adjusting circuit of a PAL system EDTV receiver for converting each line location of luminance high-band pixels average-arranged by an encoder into original line location, the circuit including: line memories for receiving and delaying luminance high-band pixel data in serial order by one horizontal scanning line; an arithmetic circuit for multiplying the luminance high-band pixel data delayed and generated in serial order by the line memories by predetermined coefficients, and for obtaining and producing upper-part correlation and lower-part correlation values by adding the luminance high-band pixel data; a correlation selecting signal determiner for comparing a predetermined threshold with the absolute value of the difference between upper-part correlation and lower-part correlation of each luminance low-band pixel data of even and odd fields extracted from a PAL system composite video baseband signal, and for producing a selecting signal in response to a result obtained from the comparison; a selecting part for selecting between correlation values inputted from the arithmetic circuit in response to the selecting signal generated from the correlation selecting signal determiner; and a gain controller for multiplying each correlation value by a random gain and producing it in order to strengthen the luminance high-band pixel data generated from the selecting part.

Preferably, the luminance high band pixel data of even and odd fields are extracted separately by providing one part of said arithmetic means, selecting means and gain controlling means to process said even field data and another set of said arithmetic means, selecting means and gain controlling means to process said odd field data.

Said arithmetic means may include:
multipliers for multiplying luminance high-band pixel data delayed and outputted to be different in order by each input and output terminal of said line memories by predetermined coefficients;
adders for producing to said selecting means upper-part correlation value and lower-part correlation value obtained by adding values obtained through the multiplication; and
dividers for producing an average value of said upper-part correlation value and lower-part correlation value to said selecting means.

Preferably, said line memories include three line memories connected in series.

Preferably, each of said luminance low-band pixel data of the odd field has a line location of the luminance high-band pixel data not average-arranged yet.

Preferably, said luminance low-band pixel data of the even field are disposed on each upper and lower horizontal scanning line of said luminance low-band pixel data of said odd field.

Preferably, the size of the upper-part correlation is indicative of an absolute value of the size obtained by subtracting said luminance low-band pixel data of the odd field by the luminance low-band pixel data of the even field of the horizontal scanning line existing on the upper part of the luminance low-band pixel data of said odd field, and the size of the lower-part correlation is indicative of an absolute value of the size obtained by subtracting said luminance low-band pixel data of the odd field by the luminance low-band pixel data of the even field of the horizontal scanning line existing on the lower part of the luminance low-band pixel data of said odd field.

Preferably, said correlation selecting signal determining means outputs to said selecting means a selecting signal for outputting to said gain controlling means an average value generated from said dividers in case that a difference between said lower-part correlation and upper-part correlation is smaller than said threshold, and outputs a selecting signal for outputting the upper-part correlation value to said gain controlling means if the upper-part correlation is smaller than the lower-part one in absolute value by comparing the upper-part correlation and lower-part correlation with each other in absolute value when the difference between said lower-part correlation and upper-part correlation is larger than said threshold, and outputs a selecting signal for outputting the lower-part correlation value to said gain controlling means if the lower-part correlation is smaller than the upper-part one in absolute value.

Preferably, said selecting signals outputted from said correlation selecting signal determining means are 2-bit data each.

For a better understanding of the invention, and to show how embodiments of the same may be carried into effect, reference will now be made, by way of example, to the accompanying diagrammatic drawings, in which:
Figure 1 is a detailed circuit diagram illustrating the steps in the extraction of a luminance high-band signal Y_{H} in an European EDTV system's decoder;
Figure 2 is detailed block diagram illustrating the extraction of luminance high-band signals Y_{H_}E and Y_{H_}O of the even and odd fields from the Y_{H} signal inputted to a line location adjusting part 18;
Figure 3 illustrates the correlation between the intra-field pixels for conventional line location adjustment;
Figure 4 illustrates the correlation of intra-field luminance low-band pixels;
Figure 5 illustrates a block diagram of a correlation detector 51 for detecting correlation between intra-field neighbouring luminance low-band pixels in accordance with an embodiment of the present invention; and
Figure 6 illustrates a detailed circuit diagram of a line location adjusting part 18 for extracting a luminance high-band signal Y_{H_}E of the even field and a luminance high-band signal Y_{H_}O of the odd field from the average luminance high-band signal Y_{H}.

In the following description, like reference numerals are used to designate like components.

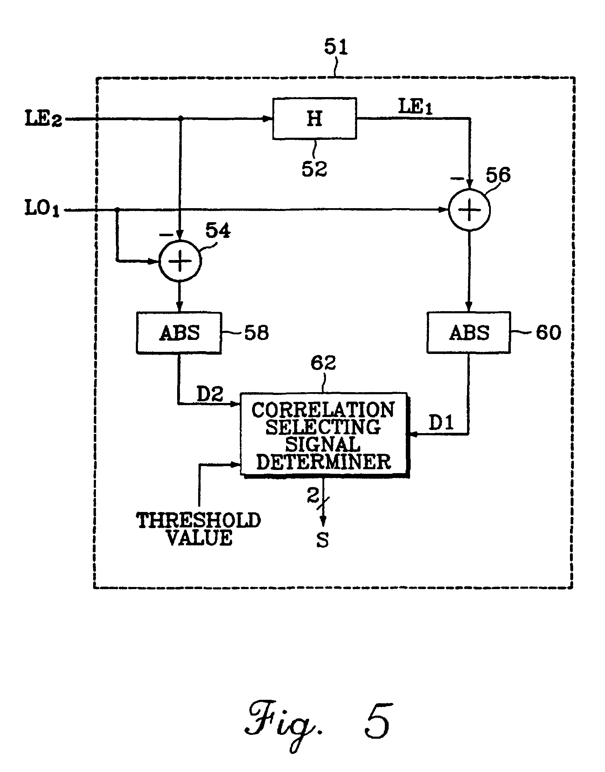

Figure 4 depicts the correlation of intra-field luminance low-band pixels in accordance with embodiments of the present invention. Reference letter H₁ denotes an average luminance high-band pixel, and LO₀ to LO₂ and LE₀ and LE₂ indicate luminance low-band pixels of the odd and even fields OF and EF, respectively. Embodiments of the present invention use a luminance low-band pixel LO₁ disposed on the position to which the pixel H₁ is moved, and neighbouring luminance low-band pixels LE₁ and LE₂.

Upper-part correlation D₁ shows the relationship between the pixel LO₁ and neighbouring luminance low-band pixel LE₁, and lower-part correlation D₂ shows the relationship between the pixel LO₁ and neighbouring luminance low-band pixel LE₂. The upper-part correlation D₁ and lower-part correlation D₂ can be obtained by the circuitry of Figure 5.

Figure 5 depicts a block diagram of a correlation detector 51 for detecting correlation between intra-field neighbouring luminance low-band pixels in accordance with the present invention. As shown in Figure 5, the pixel LO₁ inputted to the correlation detector 51 is added to the luminance low-band pixel LE₂ by an adder 54, and is then inputted to a correlation selecting signal determiner 62 as a value of D₂ substituted for an absolute value through an absolute circuit (ABS) 58. D₂ denotes a lower-part correlation, and has a value of |LO₁-LE₂|.

The luminance low-band pixel LO₁ is added to the luminance low-band LE1 by an adder 56, and is then inputted to the correlation selecting signal determiner 62 as a value of D₁ substituted for an absolute value through an absolute circuit (ABS) 60. D₁ denotes a upper-part correlation, and has a value of |LO₁-LE₁|.

The correlation selecting signal determiner 62 determines that a change between the upper and lower luminance low-band pixels is small if |D₂-D₁| is smaller than a threshold, and extracts a luminance high-band pixel HO'₁ of the odd field and a luminance high-band pixel HE'₁ of the even field by using all the luminance high-band pixels H₀, H₁ and H₂. If |D₂-D₁| is larger than a threshold, the correlation selecting signal determiner 62 detects one with the smaller absolute value than the other's of D₁ and D₂. When D₁ is smaller than D₂ in absolute value, the correlation selecting signal determiner 62 determines that the upper part correlation is larger than the lower one and the luminance high-band pixels H₀ and H₁ are used. on the contrary, when D₂ is smaller than D₁ in absolute value, the correlation selecting signal determiner 62 determines that the lower part correlation is larger than the upper one and the luminance high-band pixels H₁ and H₂ are employed. The correlation selecting signal determiner 62 generates a selecting signal S with 2-bit data of "01" in case of |D₂-D₁| ≤ threshold, of "11" in case of D₁ ≥ D₂, and of "00" in case of D₁ ≤ D_{2.}

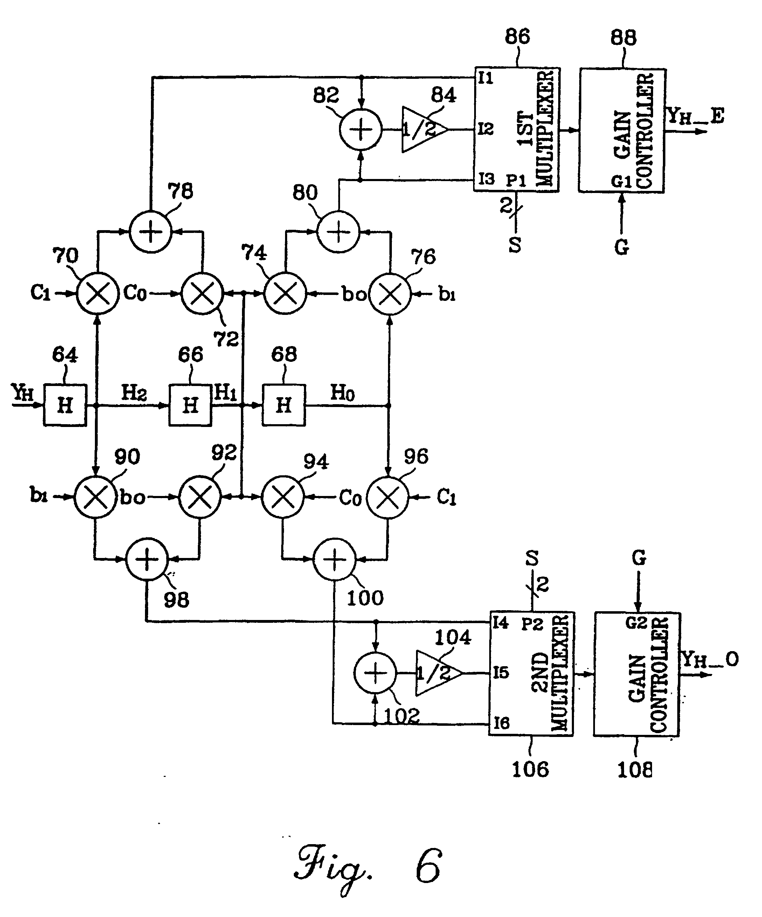

Figure 6 relates to a first preferred embodiment of the present invention, and depicts a detailed circuit diagram of the line location adjusting part 18 for separating a luminance high-band signal Y_{H_}E of the even field and a luminance high-band signal Y_{H_}O of the odd field that are respectively converted into their original line locations from the average luminance high-band signal Y_{H} arranged by the encoder.

The operation of an embodiment of the present invention is now described in detail with reference to Figure 6.

Once the average luminance high-band signal Y_{H} arranged by the encoder is applied to the line location adjusting part 18, the luminance high-band pixels H₀ to H₂ delayed by 1H are generated from the delays 64, 66 and 68 of the horizontal scanning line, respectively. Each of the luminance high-band pixels H₀ to H₂ is multiplied by predetermined coefficients C₀, C₁, b₀ and b₁ in multipliers 70, 72, 74, 76, 90, 92, 94 and 96 that constitutes an arithmetic circuit, and is processed through adders 78, 80, 82, 98, 100 and 102 and dividers 84 and 104 to be inputted to first and second multiplexers 86 and 106. The luminance high-band pixels H₂ and H₁ delayed and generated each from the left and right sides of the delay 66 of the horizontal scanning line are multiplied by predetermined coefficients b₀ and b₁ through the multipliers 90 and 92, arithmetic circuit of the odd field, and are added by the adder 98. A value obtained thereby which becomes a lower-part correlation value is inputted to terminal I4 of the second multiplexer 106. The luminance high-band pixels H₁ and H0 generated each from the left and right sides of the delay 68 are processed through the multipliers 94 and 96 and adder 100 of the odd field. A value obtained thereby which becomes a upper-part correlation value is inputted to terminal I6 of the second multiplexer 106. The luminance high-band pixels H₂, H₁ and H₀ generated from the left and right sides of the respective delays 64, 66 and 68 are processed through the multipliers 90, 92, 94 and 96 and adders 98 and 100, arithmetic circuit of the odd field, and are inputted to the adder 102.

The divider 104 finds an average value of the upper-part correlation value and lower-part correlation value, and the average value is inputted to terminal I5 of the second multiplexer 106. The lower-correlation value and upper-part correlation value and average value are inputted to input terminals I1, I2 and I3 of the first multiplexer 86, respectively, through the same arithmetic circuit as mentioned above. The first and second multiplexers 86 and 106, which finally select the location of the upper-line and lower-line of the luminance high-band pixels H₀ to H₂ arranged by the intra-field averaging circuit of the encoder, selectively output values inputted through the terminals I1 to I6 to gain controllers 88 and 108 in response to 2-bit data of the selecting signal S generated from the correlation detector 51 of Figure 5.

When 2-bit data of the selecting signal S inputted to each terminal P1 and P2 of the first and second multiplexers 86 and 106 is "00", the lower-part correlation values inputted to the terminals I1 and I4 as the upper-part correlation D₁ are outputted to the gain controllers 88 and 108. If 2-bit data of the selecting signal S inputted to each terminal P1 and P2 of the first and second multiplexers 86 and 106 is "11", the upper-part correlation values inputted to the terminals I3 and I6 as the lower-part correlation D₂ are outputted to the gain controllers 88 and 108. When 2-bit data of the selecting signal S inputted to each terminal P1 and P2 of the first and second multiplexers 86 and 106 is "01" (if |D₂-D₁| is smaller than a threshold), an average value of the upper-part correlation value and lower-part correlation value through the terminals I2 and I5 is obtained and outputted to the gain controllers 88 and 108. The gain controllers 88 and 108 multiply each value by a random gain G through terminals G1 and G2 to enhance luminance high-band components. The gain controllers 88 and 108 generates each luminance high-band signal Y_{H_}E and Y_{H_}O of the even and odd fields whose line locations are converted into original ones not arranged yet by the encoder.

As mentioned above, embodiments of the present invention can convert into the original line location each location of the luminance high-band pixels arranged by the IFA circuit of the encoder according to the upper-part correlation and lower-part correlation attained by using relationship between the intra-field luminance low-band pixels to prevent deterioration to the resolution of EDTV system.

Therefore, it should be understood that the present invention is not limited to the particular embodiment disclosed herein as the best mode contemplated for carrying out the present invention, but rather that the present invention is not limited to the specific embodiments described in this specification except as defined in the appended claims.

## Claims

1. A line location adjusting circuit of a PAL extended definition television receiver for converting each line location of luminance high-band pixels average-arranged by an encoder into original line location, comprising:
line memories (64, 66, 68) for receiving and delaying luminance high-band pixel data (Y_{H}) in serial order by one horizontal scanning line;
arithmetic means (70, 72, 74, 76, 90, 92, 94, 96) for multiplying said luminance high-band pixel data delayed and outputted in serial order from said line memory by predetermined coefficients (b₀, b₁, C₀, C₁), and for obtaining and producing upper-part correlation and lower-part correlation values by adding (78, 80, 82, 98, 100, 102) said luminance high-band pixel data;
correlation selecting signal determining means (62) for comparing a predetermined threshold with the absolute value of the difference (|D₂ - D₁|) between upper-part correlation and lower-part correlation of each luminance low-band pixel data of even and odd fields extracted from a PAL system composite video baseband signal, and for producing a selecting signal (S) in response to a result obtained from said comparison;
selecting means (86, 106) for selecting between correlation values inputted from said arithmetic means in response to the selecting signal(s) outputted from said correlation selecting signal determining means (62); and
gain controlling means (88, 108) for multiplying each correlation value by a random gain (G) and producing it in order to strengthen the luminance high-band pixel data outputted from said selecting means (86, 106).

2. The line location adjusting circuit according to claim 1, wherein the luminance high band pixel data of even and odd fields are extracted separately by providing one part of said arithmetic means, (70, 72, 74, 76, 78, 80, 82, 84), selecting means (86) and gain controlling means (88) to process said even field data and another part of said arithmetic means (90, 92, 94, 96, 98, 100, 102, 104) selecting means (106) and gain controlling means (108) to process said odd field data.

3. The line location adjusting circuit according to claim 1 or 2, wherein said arithmetic means includes:
multipliers (70, 72, 74, 76, 90, 92, 94, 96) for multiplying luminance high-band pixel data delayed and outputted to be different in order by each input and output terminal of said line memories (64, 66, 68) by predetermined coefficients;
adders (78, 80, 82, 98, 100, 102) for producing to said selecting means (86, 106) upper-part correlation value and lower-part correlation value obtained by adding values obtained through the multiplication; and
dividers (84, 104) for producing an average value of said upper-part correlation value and lower-part correlation value to said selecting means.

4. The line location adjusting circuit according to claim 1, 2 or 3, wherein said line memories (64, 66, 68) include three line memories connected in series.

5. The line location adjusting circuit according to any of the preceding claims wherein each of said luminance low-band pixel data of the odd field has a line location of the luminance high-band pixel data not average-arranged yet.

6. The line location adjusting circuit according to any of the preceding claims, wherein said luminance low-band pixel data of the even field are disposed on each upper and lower horizontal scanning line of said luminance low-band pixel data of said odd field.

7. The line location adjusting circuit according to claim 6, wherein the size of the upper-part correlation is indicative of an absolute value of the size obtained by subtracting said luminance low-band pixel data of the odd field by the luminance low-band pixel data of the even field of the horizontal scanning line existing on the upper part of the luminance low-band pixel data of said odd field, and the size of the lower-part correlation is indicative of an absolute value of the size obtained by subtracting said luminance low-band pixel data of the odd field by the luminance low-band pixel data of the even field of the horizontal scanning line existing on the lower part of the luminance low-band pixel data of said odd field.

8. The line location adjusting circuit according to claim 3 or any of claims 4 to 7 as appendant thereto wherein said correlation selecting signal determining means outputs to said selecting means a selecting signal for outputting to said gain controlling means (88, 108) an average value generated from said dividers (84,104) in case that a difference between said lower-part correlation and upper-part correlation is smaller than said threshold, and outputs a selecting signal for outputting the upper-part correlation value to said gain controlling means (88, 108) if the upper-part correlation is smaller than the lower-part one in absolute value by comparing the upper-part correlation and lower-part correlation with each other in absolute value when the difference between said lower-part correlation and upper-part correlation is larger than said threshold, and outputs a selecting signal for outputting the lower-part correlation value to said gain controlling means (88, 108) if the lower-part correlation is smaller than the upper-part one in absolute value.

9. The line location adjusting circuit according to claim 8, wherein said selecting signals outputted from said correlation selecting signal determining means (62) are 2-bit data each.

## Patentansprüche

1. Zeilenpositions-Reguliervorrichtung eines PAL-EDTV-Empfängers zum Umwandeln jeder Zeilenposition von von einem Kodierer gemittelt angeordneten Helligkeits-Hochband-Bildpunkten in eine Original-Zeilenposition, die umfasst:
Zeilenspeicher (64, 66, 68), die Helligkeits-Hochband-Bildpunkt-Daten (Y_{H}) empfangen und in serieller Reihenfolge um eine horizontale Abtastzeile verzögern;
arithmetische Einrichtungen (70, 72, 74, 76, 90, 92, 94, 96), die die von dem Zeilenspeicher verzögerten und in serieller Reihenfolge ausgegebenen Helligkeits-Hochband-Bildpunkt-Daten mit vorgegebenen Koeffizienten (b₀, b₁, c₀, c₁) multiplizieren und Oberteil-Korrelations- sowie Unterteil-Korrelatitonswerte bestimmen und erzeugen, indem sie die Helligkeits-Hochband-Bildpunkt-Daten addieren (78, 80, 82, 98, 100, 102);
eine Korrelationsauswählsignal-Bestimmungseinrichtung (62), die einen vorgegebenen Stellenwert mit dem Absolutwert einer Differenz (|D₂-D₁|) zwischen der Oberteil-Korrelation und der Unterteil-Korrelation aller Helligkeits-Niedrigband-Bildpunkt-Daten gerader und ungerader Teilbilder vergleicht, die aus einem PAL-System-Gesamt-Video-Basisband-Signal extrahiert werden, und in Reaktion auf ein mit dem Vergleich ermitteltes Ergebnis ein Auswählsignal S erzeugt;
Auswähleinrichtungen (86, 106), die zwischen Korrelationswerten auswählen, die von den arithmetischen Einrichtungen in Reaktion auf das/die Auswählsignal/e eingegeben werden, die von der Korrelationsauswählsignal-Bestimmungseinrichtung (62) ausgegeben werden; und
Verstärkungsfaktor-Steuereinrichtungen (88, 108), die jeden Korrelationswert mit einem beliebigen Verstärkungsfaktor (G) multiplizieren und ihn erzeugen, um die von der Auswähleinrichtung (86, 106) ausgegebenen Heiligkeits-Hochband-Bildpunkt-Daten zu verstärken.

2. Zellenpositions-Regulierschaltung nach Anspruch 1, wobei die Helligkeits-Hochband-Bildpunkt-Daten gerader und ungerader Teilbilder separat extrahiert werden, indem ein Teil der arithmetischen Einrichtungen (70, 72, 74, 76, 78, 80, 82, 84), der Auswähleinrichtungen (86) und der Verstärkungsfaktor-Steuereinrichtungen (88) die Daten der geraden Teilbilder verarbeitet und ein anderer Teil der arithmetischen Einrichtungen (90, 92, 94, 96, 98, 100, 102, 104), der Auswähleinrichtungen (106) und der Verstärkungsfaktor-Steuereinrichtungen (108) die Daten der ungeraden Teilbilder verarbeitet.

3. Zeilenpositions-Regulierschaltung nach Anspruch 1 oder 2, wobei die arithmetischen Einrichtungen enthalten:
Multiplizierer (70, 72, 74, 76, 90, 92, 94, 96), die Helligkeits-Hochband-Bildpunkt-Daten, die von jedem Eingangs- und Ausgangsanschluss der Zeilenspeicher (64, 66, 68) so verzögert und ausgegeben werden, dass sie unterschiedliche Reihenfolge aufweisen, mit vorgegebenen Koeffizienten multiplizieren;
Addierer (78, 80, 82, 98, 100, 102), die für die Auswählweinrichtungen (86, 106) einen Oberteil-Korrelationswert und einen Unterteil-Korreiationswert erzeugen, die bestimmt werden, indem durch die Multiplikation bestimmte Werte addiert werden; und
Dividierer (84, 104), die einen Durchschnittswert des Oberteil-Korrelationswertes und des Unterteil-Korrelationswertes für die Auswähleinrichtungen erzeugen.

4. Zeilenpositions-Regulierschaltung nach Anspruch 1, 2 oder 3, wobei die Zeilenspeicher (64, 66, 68) drei in Reihe verbundene Zeilenspeicher enthalten.

5. Zeilenpositions-Regulierschaltung nach einem der vorangehenden Ansprüche, wobei alle Helligkeits-Niedrigband-Bildpunkt-Daten des ungeraden Teilbildes eine Zeilenposition der Helligkeits-Hochband-Bildpunkt-Daten haben, die noch nicht gemittelt angeordnet wurde.

6. Zeilenpositions-Regulierschaltung nach einem der vorangehenden Ansprüche, wobei die Helligkeits-Niedrigband-Bildpunkt-Daten des geraden Teilbildes auf jeder oberen und unteren Horizontal-Abtastzeile der Helligkeits- Niedrigband-Bildpunkt-Daten des geraden Teilbildes angeordnet sind.

7. Zeilenpositions-Regulierschaltung nach Anspruch 6, wobei die Größe der Oberteil-Korrelation einen Absolutwert der Größe anzeigt, der bestimmt wird, indem die Helligkeits-Niedrigband-Bildpunkt-Daten des geraden Teilbildes der Horizontal-Abtastzeile, die im Oberteil der Helligkeits-Niedrigband-Bildpunkt-Daten des ungeraden Teilbildes vorhanden sind, von den Helligkeits-Niedrigband-Bildpunkt-Daten des ungeraden Halbbildes subtrahiert wird, und die Größe der Unterteil-Korrelation einen Absolutwert der Größe anzeigt, der bestimmt wird, indem die Helligkeits-Niedrigband-Bildpunkt-Daten des geraden Teilbildes der Horizontal-Abtastlinie, die im Unterteil der Helligkeits-Niedrigband-Bildpunkt-Daten des ungeraden Teilbildes vorhanden sind, von den Helligkeits-Niedrigband-Bildpunkt-Daten des ungeraden Teilbildes subtrahiert werden.

8. Zeilenpositions-Regulierschaltung nach Anspruch 3 oder einem der Ansprüche 4 bis 7, wenn daran angefügt, wobei die Korrelationsauswählsignal-Bestimmungseinrichtung an die Auswähleinrichtung ein Auswählsignal zum Ausgeben eines von den Dividierern (84, 104) erzeugten Mittelwertes an die Verstärkungsfaktor-Steuereinrichtungen (88, 108) für den Fall ausgibt, dass eine Differenz zwischen der Unterteil-Korrelation und der Oberteil-Korrelation kleiner ist als der Schwellenwert, und ein Auswählsignal zum Ausgeben des Oberteil-Korrelationswertes an die Verstärkungsfaktor-Steuereinrichtungen (88, 108) ausgibt, wenn die Oberteil-Korrelation bezüglich des Absolutwertes beim Vergleich der Oberteil-Korrelation und der Unterteil-Korrelation miteinander bezüglich des Absolutwertes kleiner ist als die Unterteil-Korrelation, wenn die Differenz zwischen der Unterteil-Korrelation und der Oberteil-Korrelation größer ist als der Schwellenwert, und ein Auswählsignal zum Ausgeben des Unterteil-Korrelationswertes an die Verstärkungsfaktor-Steuereinrichtungen (88, 108) ausgibt, wenn die Unterteil-Korrelation bezüglich des Absolutwertes kleiner ist als die Oberteil-Korrelation.

9. Zeilenpositions-Regulierschaltung nach Anspruch 8, wobei die von der Korrelationsauswählsignal-Bestimmungseinrichtung (62) ausgegebenen Signale jeweils 2-Bit-Daten sind.

## Revendications

1. Circuit d'ajustement d'emplacement de lignes d'un récepteur de télévision à définition étendue PAL pour convertir chaque emplacement de ligne de pixels en bande supérieure de luminance moyennés par un codeur en un emplacement de ligne d'origine, comprenant :
des mémoires de ligne (64, 66, 68) destinées à recevoir et à retarder d'une ligne de balayage horizontal des données de pixels en bande supérieure de luminance (Y_{H}) dans un ordre successif;
des moyens arithmétiques (70, 72, 74, 76, 90, 92, 94, 96) destinés à multiplier lesdites données de pixels en bande supérieure de luminance retardées et délivrées en sortie dans un ordre successif à partir desdites mémoires de ligne par des coefficients prédéterminés (b₀, b₁, C₀, C₁), et à obtenir et à produire des valeurs de corrélation de partie supérieure et de corrélation de partie inférieure en ajoutant (78, 80, 82, 98, 100, 102) lesdites données de pixels en bande supérieure de luminance;
des moyens de détermination de signal de sélection de corrélation (62) destinés à comparer un seuil prédéterminé avec la valeur absolue de la différence (|D₂ - D₁|) entre la corrélation de partie supérieure et la corrélation de partie inférieure de chacune des données de pixels en bande inférieure de luminance de trames paire et impaire extraites d'un signal en bande de base vidéo composite de système PAL, et à produire un signal de sélection (S) en réponse au résultat obtenu à partir de ladite comparaison;
des moyens de sélection (86, 106) destinés à effectuer une sélection entre les valeurs de corrélation reçues en entrée à partir desdits moyens arithmétiques en réponse au signal de sélection (S) fourni en sortie par lesdits moyens de détermination de signal de sélection de corrélation (62); et
des moyens de commande de gain (88, 108) destinés à multiplier chaque valeur de corrélation par un gain aléatoire (G) et à la produire afin de renforcer les données de pixels en bande supérieure de luminance fournies en sortie par lesdits moyens de sélection (86, 106).

2. Circuit d'ajustement d'emplacement de lignes selon la revendication 1, dans lequel les données de pixels en bande supérieure de luminance de trames paire et impaire sont extraites séparément grâce au fait qu'une partie desdits moyens arithmétiques (70, 72, 74, 76, 78, 80, 82, 84), desdits moyens de sélection (86) et desdits moyens de commande de gain (88) est prévue pour traiter lesdites données de trame paire, tandis qu'une autre partie desdits moyens arithmétiques (90, 92, 94, 96, 98, 100, 102, 104), desdits moyens de sélection (106) et desdits moyens de commande de gain (108) est prévue pour traiter lesdites données de trame impaire.

3. Circuit d'ajustement d'emplacement de lignes selon la revendication 1 ou 2, dans lequel lesdits moyens arithmétiques comprennent :
des multiplicateurs (70, 72, 74, 76, 90, 92, 94, 96) destinés à multiplier par des coefficients prédéterminés les données de pixels en bande supérieure de luminance retardées et fournies en sortie pour avoir un ordre différent par chaque borne d'entrée et de sortie desdites mémoires de ligne (64, 66, 68);
des additionneurs (78, 80, 82, 98, 100, 102) destinés à fournir auxdits moyens de sélection (86, 106) une valeur de corrélation de partie supérieure et une valeur de corrélation de partie inférieure obtenues par l'addition de valeurs obtenues grâce à la multiplication; et
des diviseurs (84, 104) destinés à fournir une valeur moyenne de ladite valeur de corrélation de partie supérieure et de ladite valeur de corrélation de partie inférieure auxdits moyens de sélection.

4. Circuit d'ajustement d'emplacement de lignes selon la revendication 1, 2 ou 3, dans lequel lesdites mémoires de ligne (64, 66, 68) comprennent trois mémoires de ligne montées en série.

5. Circuit d'ajustement d'emplacement de lignes selon l'une quelconque des revendications précédentes, dans lequel chacune desdites données de pixels en bande inférieure de luminance de la trame impaire a un emplacement de ligne des données de pixels en bande supérieure de luminance qui ne sont pas encore moyennés.

6. Circuit d'ajustement d'emplacement de lignes selon l'une quelconque des revendications précédentes, dans lequel lesdites données de pixels en bande inférieure de luminance de la trame paire sont disposées sur chaque ligne de balayage horizontal supérieure et inférieure desdites données de pixels en bande inférieure de luminance de ladite trame impaire.

7. Circuit d'ajustement d'emplacement de lignes selon la revendication 6, dans lequel la grandeur de la corrélation de partie supérieure est indicative d'une valeur absolue de la grandeur obtenue en soustrayant desdites données de pixels en bande inférieure de luminance de la trame impaire les données de pixels en bande inférieure de luminance de la trame paire de la ligne de balayage horizontal existant sur la partie supérieure des données de pixels en bande inférieure de luminance de ladite trame impaire, et la grandeur de la corrélation de partie inférieure est indicative d'une valeur absolue de la grandeur obtenue en soustrayant desdites données de pixels en bande inférieure de luminance de la trame impaire les données de pixels en bande inférieure de luminance de la trame paire de la ligne de balayage horizontal existant sur la partie inférieure des données de pixels en bande inférieure de luminance de ladite trame impaire.

8. Circuit d'ajustement d'emplacement de lignes selon la revendication 3 ou l'une quelconque des revendications 4 à 7, lorsqu'elles sont dépendantes de celle-ci, dans lequel lesdits moyens de détermination de signal de sélection de corrélation délivrent auxdits moyens de sélection un signal de sélection pour fournir en sortie auxdits moyens de commande de gain (88, 108) une valeur moyenne générée à partir desdits diviseurs (84, 104) dans le cas où une différence entre ladite corrélation de partie inférieure et ladite corrélation de partie supérieure est inférieure audit seuil, et délivrent un signal de sélection pour fournir en sortie la valeur de corrélation de partie supérieure auxdits moyens de commande de gain (88, 108) si la corrélation de partie supérieure est inférieure à la corrélation de partie inférieure en valeur absolue, en comparant la corrélation de partie supérieure et la corrélation de partie inférieure l'une avec l'autre en valeur absolue, lorsque la différence entre ladite corrélation de partie inférieure et ladite corrélation de partie supérieure est supérieure audit seuil, et un signal de sélection pour fournir en sortie la valeur de corrélation de partie inférieure auxdits moyens de commande de gain (88, 108) si la corrélation de partie inférieure est inférieure à la corrélation de partie supérieure en valeur absolue.

9. Circuit d'ajustement d'emplacement de lignes selon la revendication 8, dans lequel lesdits signaux de sélection délivrés à partir desdits moyens de détermination de signal de sélection de corrélation (62) consistent chacun en données à 2 bits.
